# EUROPÄISCHE PATENTSCHRIFT

(11) **EP 1 304 348 B1**
(45) Veröffentlichungstag und Bekanntmachung des Hinweises auf die Patenterteilung: **06.06.2007**
(21) Anmeldenummer: 02022829.2
(22) Anmeldetag: 12.10.2002
(51) Int. Cl.: C08J 5/06

(54) **Faserverbundformteil und Verfahren zur Herstellung eines Faserverbundformteils**
Molded article comprising fibres and method for manufacturing same
Article moulé contenant des fibres et procédé pour sa préparation

(30) Priorität: 22.10.2001 DE 10151357
(43) Veröffentlichungstag der Anmeldung: 23.04.2003
(73) Patentinhaber: Deutsches Zentrum für Luft- und Raumfahrt e.V., 51147 Köln (DE)
(72) Erfinder: Riedel, Ulrich, Dr., 38104 Braunschweig (DE); Mosch, Jürgen, 38518 Gifhorn (DE); Hagedorn, Wolfgang, 38159 Vechelde (DE)
(74) Vertreter: Lins, Edgar

(56) Entgegenhaltungen:
- EP-A- 0 859 031
- DE-A- 19 647 671
- DE-A- 19 835 983
- US-A- 3 577 310

## Beschreibung

Die Erfindung betrifft ein Verfahren zur Herstellung eines Faserverbundformteils aus wenigstens einer Lage eines Verstärkungsmaterials aus Naturfasern und einem aushärtenden Biopolymer, bei dem die zugeschnittene Lage aus Gewebe, Vlies, Gelege, Papier, Gestrick oder Gewirk gebildet zugeschnittene Lage aus Verstärkungsmaterial mit dem Biopolymer in flüssiger Form getränkt und anschließend durch Pressen geformt und ausgehärtet wird.

Die Erfindung betrifft ferner ein Faserverbundformteil, aufgebaut mit wenigstens einer aus Gewebe, Vlies, Gelege, Papier, Gestrick oder Gewirk gebildeten Lage aus einem Verstärkungsmaterial aus Naturfasern und einem ausgehärteten Biopolymer.

Faserverbundwerkstoffe werden insbesondere dann verwendet, wenn hohe Festigkeiten und Steifigkeiten bei geringem Gewicht erzielt werden sollen. Die vorteilhaften Eigenschaften der Faserverbundwerkstoffe ergeben sich aus den geringen Dichten der verwendeten Matrixharze, wie z. B. ungesättigte Polyester, Phenolharze, Epoxidharze, und die darin eingebetteten hochfesten und hochsteifen Fasern (z. B. Glas-, Aramid-, Kohlenstofffasem). Zur Erstellung des Verbundes zwischen diesen Materialien sind verschiedenste Fertigungstechnologien entwickelt worden, u. a. die Presstechnik. Die klassischen Faserverbundwerkstoffe werfen jedoch oftmals erhebliche Probleme hinsichtlich ihrer Verwertung nach dem Ablauf ihrer Nutzungsdauer auf. Die Kombination dieser Werkstoffe aus verschiedenartigen und in der Regel sehr beständigen Fasern und Matrizes erweist sich als großes Erschwernis für das Recycling. Eine bloße Deponierung verbietet sich angesichts der wachsenden Umwettprvblematik immer mehr.

Einen bekannten Lösungsansatz bieten naturfaserverstärkte Biopolymere. Werden Pflanzenfasern, wie z. B. Flachs, Hanf, Ramie, Jute, in Biopolymer-Matrizes, z. B. Zellulose-, Stärke-, Milchsäure-, Schellackderivate oder pflanzenölbasierte Duroplaste eingebettet, können Faserverbunde hergestellt werden, die durch CO₂-neutrale Verbrennung, Rohstoffrecycling und unter Umständen durch Kompostierung umweltverträglich entsorgt werden können. Darüber hinaus wird durch die Verwendung nachwachsender Rohstoffe das Problem der intensiven Nutzung endlicher Ressourcen vermieden.

Die Herstellung der herkömmlichen Faserverbundwerkstoffe mit petrostämmigen Matrixsystemen erfolgt mit Hilfe der Presstechnik durch im Wesentlichen zwei Verfahren, das Nasspressen und das Prepreg-Verfahren.

Beim Nasspressen wird das Faserhalbzeug mit einem Harz imprägniert und das noch nasse Halbzeug in das heiße Formgebungswerkzeug eingebracht. Nach dem Pressen kann das fertige Bauteil entnommen und der Nachbearbeitung zugeführt werden.

Beim Prepreg-Verfahren wird das Faserhalbzeug mit einem Harz imprägniert und anschließend getrocknet. In diesem Zustand kann es transportiert, gelagert und bearbeitet, beispielsweise zugeschnitten, werden. Zur Herstellung des Faserverbundformtells wird das Prepreg in das Formgebungswerkzeug eingebracht und heiß gepresst, wodurch das duroplastische Harz vernetzt. Nach der vorbestimmten Presszeit kann das fertige Bauteil entnommen und der Nachbearbeitung zugeführt werden.

Die zur Verfügung stehenden biopolymeren Matrixsysteme erlauben eine Herstellung von Faserverbundformteilen nur im Nassverfahren. Demzufolge muss der Arbeitsschritt Tränkung des Faserhalbzeuges" unmittelbar von dem Fertigungsschritt "Pressen" gefolgt werden. Eine Vorbereitung des regelmäßig zugelieferten textilen Faser-Verstärkungsmaterials, beispielsweise das Zuschneiden für einen bestimmten Anwendungsfall, muss an dem nicht formstabilen Verstärkungsmaterial in relativ komplizierter Weise vorgenommen werden. Darüber hinaus ist die Handhabung des Verstärkungsmaterials zum Zwecke des Transports, der Lagerung usw. schwierig.

Durch EP 0 859 031 A2 ist ein faserverstärktes Kunststoff-Formteil aus Naturfasern als Verstärkungsmaterial bekannt. Als nachteilig wird dabei angesehen, dass das Kunststoff-Formteil anfällig für eine biologische Beanspruchung ist. Daher ist vorgesehen, die Kunststoffmatrix aus zwei miteinander vermischten Polymeren herzustellen, von denen eins ein Biopolymer und das zweite ein gegen biologische Beanspruchungen resistentes Polymer ist. Die Verarbeitung des Polymergemisches erfolgt im Nasspressverfahren. Dabei werden die Verstärkungsfasern in die Polymermischung regellos eingebracht.

Durch DE 198 35 983 A1 ist es bekannt, die Haftfestigkeit von Zellulosefasern bei der Einbringung in eine thermoplastische Matrix dadurch zu verbessern, dass die Fasern mit einem harzartigen Duroplast beschichtet werden, der auf den Fasern aushärtet. Der harzartige Duroplast bildet somit eine Ummantelung der Fasern oder der mit den Fasern gebildeten Fäden, mit denen das Verstärkungsmaterial hergestellt wird. Wegen der Ummantelung der Fasern bzw. Fäden ergibt sich eine gute Einbindung des Verstärkungsmaterials in die thermoplastische Matrix.

Die vorliegende Erfindung geht somit von der Problemstellung aus, die Herstellung eines Faserverbundformteils mit umweltverträglichen Biopolymeren zu ermöglichen, ohne die genannten Handhabungsnachteile in Kauf nehmen zu müssen.

Ausgehend von dieser Problemstellung ist erfindungsgemäß ein Verfahren der eingangs erwähnten Art dadurch gekennzeichnet, dass auf die Lage des Verstärkungsmaterials vor dem Tränken mit dem Biopolymer eine chemische Bindeflüssigkeit aufgetragen wird, sodass nach dem Trocknen der Bindeflüssigkeit eine nach Art eines Prepregs schubfeste und klebfreie Lage gebildet wird und dass der Anteil des chemischen Bindemittels an der gesamten Bindemittelmatrix unter 20 %, vorzugsweise unter 5 % liegt.

Ein Faserverbundformteil der eingangs erwähnten Art ist erfindungsgemäß dadurch gekennzeichnet, dass die Lage aus dem Verstärkungsmaterialmit einem die Fasern des Verstärkungsmaterials in der Lage zueinander fixierenden Schicht aus einem chemischen Bindemittel beschichtet ist und dass der Anteil des chemischen Bindemittels an der gesamten Bindemittelmatrix unter 20 %, vorzugsweise unter 5 %, liegt.

Mit der vorliegenden Erfindung wird somit die Erkenntnis ausgenutzt, dass für die Verbesserung der Handhabung des Verstärkungsmaterials vor der eigentlichen Herstellung des Faserverbundformteils nur eine sehr geringe Menge eines chemischen Bindemittels erforderlich ist, um das Verstärkungsmaterial durch eine schubfeste und klebfreie Ausbildung besser handhabbar und bearbeitbar zu machen und dass eine derartig geringe Menge des chemischen Bindemittels die umweltverträgliche Entsorgung des Faserverbundformteils nach Ablauf seiner Nutzungsdauer nicht beeinträchtigt.

Die Verbesserung der Handhabung ergibt sich für den Transport, die Lagerung und die Bearbeitung, insbesondere für das Zuschneiden des Verstärkungsmaterials durch Stanzen.

Das erfindungsgemäß schubfest und klebfrei ausgebildete Verstärkungsmaterial wird regelmäßig vor dem Pressen in mehreren Lagen gestapelt, da Faserverbundformteile regelmäßig mit zahlreichen Lagen eines Verstärkungsmaterials gebildet werden.

Der erfindungsgemäße dünne Auftrag der Bindeflüssigkeit erlaubt auch eine gewisse Vorformung des Verstärkungsmaterials beim Trocknen der Bindeflüssigkeit. Die Aufbringung der Bindeflüssigkeit auf das Verstärkungsmaterial kann nach jedem bekannten Verfahren, also mittels Sprüh-, Walzen-, Kalander- oder Tränkbadauftrag erfolgen, wobei der Auftrag durch ein Tränkbad bevorzugt ist.

Obwohl das erfindungsgemäß beschichtete Verstärkungsmaterial kein Prepreg im herkömmlichen Sinne ist, da die eigentliche Matrix des Faserverbundformteils durch das später zugeführte Biopolymer gebildet wird, lässt sich das erfindungsgemäß schubfest und klebfrei ausgebildete Verstärkungsmaterial in ähnlicher Weise wie ein herkömmliches Prepreg verarbeiten.

Der Anteil des chemischen Bindemittels an der gesamten Bindemittelmatrix des erfindungsgemäßen Faserverbundformteils beträgt deutlich weniger als 20 Gew.%.

Das erfindungsgemäß verwendete Biopolymer ist vorzugsweise ein Duroplast, der aus der Gruppe der aushärtenden Zellulose-, Stärke-, Milchsäure-, Schellackderivate und der pflanzenölbasierten Duroplaste ausgewählt ist.

Die beigefügte Zeichnung verdeutlicht den Herstellungsprozess für ein erfindungsgemäßes Faserverbundformteil an einem Ausführungsbeispiel. Es zeigen:
- Figur 1 -: eine Schnittdarstellung der Fasern eines gewebten Faser-Verstärkungsmaterials
- Figur 2 -: eine Schnittdarstellung gemäß Figur 1 nach dem Aufbringen einer dünnen Beschichtung mit einem chemischen Bindemittel und
- Figur 3 -: eine Schnittdarstellung gemäß Figur 2 für das fertige Faserverbundformteil nach dem Aushärten des Biopolymerharzes.

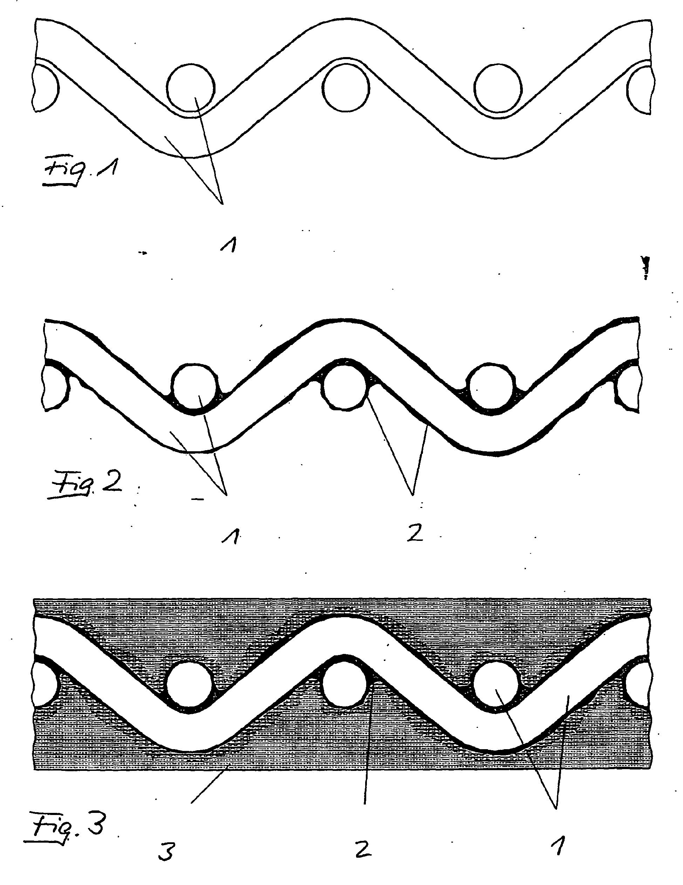

Figur 1 verdeutlicht Fasern 1, die als Kett- und Schussfasern eines gewebten Verstärkungsmaterials dargestellt sind.

Figur 2 lässt erkennen, dass die Fasern 1 eine dünne Beschichtung mit einem chemischen Bindemittel 2 erhalten haben, wobei die Beschichtung so dünn ist, dass das gebildete Verstärkungsmaterial gerade schubfest geworden ist und sich somit leicht handhaben und bearbeiten, beispielsweise Stanzen, lässt. Das chemische Bindemittel 2 führt somit lediglich zu einer gewissen Fixierung der verschiedenen Fasern 1 zueinander, nicht jedoch zu einer Einbettung der Fasern in eine Polymermatrix.

Diese Einbettung der Fasern 1 mit ihrer Beschichtung 2 in eine Matrix eines Biopolymers 3 ist in Figur 3 dargestellt. In dieser Darstellung ist deutlich, dass die Beschichtung 2 mit einem chemischen Bindemittel nur einen kleinen Bruchteil der gesamten Einbettung der Fasern 1 in dem Faserverbundformteil ausmacht und dass nahezu das gesamte Einbettungsvolumen durch das Biopolymer 3 gestellt wird. Das Verhältnis der Menge des chemischen Bindemittels 2 zur Menge des Biopolymers liegt unter 20 Gew.%., vorzugsweise unter 5 Gew.%.

Nachfolgend ist beispielhaft die Herstellung eines Faserverbundformteils beschrieben:

Ein Naturfaserhalbzeug, das beispielsweise als Gewebe, Vlies, Gelege, Papier, Gestrick, Gewirk aus Flachs, Hanf, Jute, unter den Handelsnamen Lyocell oder Newcell vertriebenen zellulosebasierten Fasern, Sisal, Bromeliafasern oder Ramie bestehen kann, vorzugsweise ein Flachsgewebe 1 (Leinwandbindung, Garn, Nm 3,6, Faserlänge 60 bis 150 mm, 17 bis 28 µm bei normalen Klimabedingungen, Flächengewicht ca. 250 g/m² wird mit 0,5 bis 20 % einer Bindeflüssigkeit versetzt). Die genannten zellulosebasierte Fasern werden z. B. durch Zerkleinerung von Holz und Faserbildung aus dem zerkleinerten Material hergestellt.

Die Bindeflüssigkeit kann auf Vinylbasis (Acrylat, Styrol-Acrylate, Vinyl-Acrylate, Vinyl-Acetate, Ethylen-Vinyl-Acetate, Styrol-Butadien, Polyvinylchlorid, Ethylen-Vinyl-Chlorid, Vinyl-Alkohol, Butadien-Acrylat), aus der Klasse der Elastomere (Polyurethan, Silikon-Elastomer, Naturkautschuk) oder aus der Klasse vernetzte Duroplaste (Phenolharz, Melaminharz, Harnstoffharz, Formaldehydharz, Epoydharz, Alkydharz, Polyesterharz) gebildet oder mit einen Comonomer (Ethylen, Butadien, Butyl-Acrylat, Ethyl-Acrylat, Vinyl-Acetat, Vinyl-Chlorid, MethylMethacrylat, Styrol, Acrylnitril) versetzt sein. Eine bevorzugte Bindeflüssigkeit ist 4 % Polyvinylalkohol.

Die Beschichtung des Naturfaserhalbzeuges mit der Bindeflüssigkeit kann in Form eines Sprüh-, Walzen-, Tränkbad oder Kalanderauftrages erfolgen, vorzugsweise mittels eines Tränkbades.

Nach dem Trocknen steht ein schubfestes und klebfreies Verstärkungsmaterial zur Verfügung. Die die Lagen eines Faserverbundformteils bildenden Verstärkungsmaterialien werden entsprechend dem gewünschten Schnittmuster ausgestanzt.

Zur endgültigen Herstellung des Faserverbundformteils werden die Einzellagen entsprechend einem Lagenplan geschichtet und in ein Formgebungswerkzeug, das sich in einer Presse befindet, eingebracht.

Das Formgebungswerkzeug ist auf 50 bis 200°C, vorzugsweise etwa 150°C, aufgeheizt. Anschließend wird eine genau abgewogene Menge eines Duroplasten aus nachwachsenden Rohstoffen in die Kavität gegeben. Geeignete Duroplaste dieser Art sind unter den Bezeichnungen PTP (Firma Preform), Tribest (Firma Cognis), Elastoflex (Firma Elastogran/BASF) im Handel. Diese Polymere reagieren wie Epoxidharze, ungesättigte Polyester, Acrylate, Vinylester oder Polyurethane. Sie können mit entsprechenden Beschleunigern, vorzugsweise Tribest L 380 gemischt mit Comonomeren bis zu 49 %, vorzugsweise 20% Methacrylsäure und 10 % Photomer 3005 F sowie 1 bis 5 % eines Peroxids, vorzugsweise 3 % PK 295 V und 0 - 10 % eines Beschleunigers C12 oder CA12, vorzugsweise jedoch ohne Beschleuniger, versetzt werden. Die Presse wird geschlossen und nach 0,25 bis 5 Minuten, vorzugsweise nach 2 Minuten wieder geöffnet und das fertige Bauteil entformt.

Die erfindungsgemäßen Faserverbundformteile können in allen herkömmlichen Anwendungsbereichen für Faserverbundformteile eingesetzt werden, beispielsweise in der Elektrotechnik, im Bauwesen, im Automobilbau, in der Schifffahrt, in der Luftfahrt, im Behälterbau, Gerätebau für Sportartikel Sie bieten den Vorteil eines problemlosen Recycling bei einer problemlosen Handhabung und Bearbeitung des Verstärkungsmaterials zur Vorbereitung des eigentlichen Herstellungsprozesses.

## Patentansprüche

1. Verfahren zur Herstellung eines Faserverbundformteils aus wenigstens einer Lage eines Verstärkungsmaterials aus Naturfasern (1) und einem aushärtenden Biopolymer (3), bei dem die aus Gewebe, Vlies, Gelege, Papier, Gestrick oder Gewirk gebildete zugeschnittene Lage aus Verstärkungsmaterial mit dem Biopolymer (3) in flüssiger Form getränkt und anschließend durch Pressen geformt und ausgehärtet wird, **dadurch gekennzeichnet, dass** auf die Lage des Verstärkungsmaterials vor dem Tränken mit dem Biopolymer (3) eine chemische Bindeflüssigkeit (2) aufgetragen wird, sodass nach dem Trocknen der Bindeflüssigkeit (2) eine nach Art eines Prepregs schubfeste und klebfreie Lage gebildet wird und dass der Anteil des chemischen Bindemittels an der gesamten Bindemittelmatrix unter 20% liegt.

2. Verfahren nach Anspruch 1, **dadurch gekennzeichnet, dass** das schubfest und klebfrei ausgebildete Verstärkungsmaterial vor dem Pressen in mehreren Lagen gestapelt wird.

3. Verfahren nach Anspruch 1 oder 2, **dadurch gekennzeichnet, dass** erst das schubfest und klebfrei ausgebildete Verstärkungsmaterial zugeschnitten wird.

4. Verfahren nach Anspruch 3, **dadurch gekennzeichnet, dass** das Zuschneiden durch Stanzen vorgenommen wird.

5. Verfahren nach einem der Ansprüche 1 bis 4, **dadurch gekennzeichnet, dass** das Verstärkungsmaterial beim Trocknen der Bindeflüssigkeit (2) vorgeformt wird.

6. Verfahren nach einem der Ansprüche 1 bis 5, **dadurch gekennzeichnet, dass** die Bindeflüssigkeit (2) mittels eines Tränkbades aufgebracht wird.

7. Verfahren nach einem der Ansprüche 1 bis 6, **dadurch gekennzeichnet, dass** der Anteil des chemischen Bindemittels an der gesamten Bindemittelmatrix unter 5 % liegt.

8. Faserverbundformteil, aufgebaut mit wenigstens einer aus Gewebe, Vlies, Gelege, Papier, Gestrick oder Gewirk gebildeten Lage aus einem Verstärkungsmaterial aus Naturfasern (1) und einem ausgehärteten Biopolymer (3), **dadurch gekennzeichnet, dass** die Lage aus dem Verstärkungsmaterial mit einem die Fasern (1) des Verstärkungsmaterials in der Lage zueinander fixierenden Schicht aus einem chemischen Bindemittel (2) beschichtet ist und dass der Anteil des chemischen Bindemittels an der gesamten Bindemittelmatrix unter 20 % liegt.

9. Faserverbundformteil nach Anspruch 8, **dadurch gekennzeichnet, dass** die Naturfasern (1) aus Flachs-, Hanf-, Ramie-, Jutefasem oder zellulosebasierte Fasern gebildet sind.

10. Faserverbundformteil nach Anspruch 8 oder 9, **dadurch gekennzeichnet, dass** das Biopolymer (3) ein Duroplast ist.

11. Faserverbundformteil nach Anspruch 10, **dadurch gekennzeichnet, dass** das Biopolymer aus der Gruppe aus aushärtenden Zellulose-, Stärke-, Milchsäure-, Schellackderivaten und pflanzenölbasierten Duroplasten ausgewählt ist.

12. Faserverbundformteil nach einem der Ansprüche 8 bis 11, **gekennzeichnet durch** mehrere aufeinander gestapelte Lagen des mit dem chemischen Bindemittel (2) beschichteten Verstärkungsmaterials.

13. Faserverbundformteil nach einem der Ansprüche 8 bis 12, **dadurch gekennzeichnet, dass** der Anteil des chemischen Bindemittels an der gesamten Bindemittelmatrix unter 5 % liegt.

## Claims

1. Process for production of a fibre-composite moulding composed of at least one layer of a reinforcing material composed of natural fibres (1) and of a curable biopolymer (3), in which the layer formed from woven, non-woven, scrim, paper, or knitted fabric and cut to size and composed of reinforcing material is impregnated with the biopolymer (3) in liquid form and then, via compression, is moulded and cured, **characterized in that** a chemical binder liquid (2) is applied to the layer of the reinforcing material prior to impregnation with the biopolymer (3), so that after drying of the binder liquid (2) a prepreg-like shear-resistant and non-tacky layer is formed and that the proportion of the chemical binder based on the entire binder matrix is below 20%.

2. Process according to Claim 1, **characterized in that** the shear-resistant and non-tacky reinforcing material is stacked prior to compression in a plurality of layers.

3. Process according to Claim 1 or 2, **characterized in that** the reinforcing material is cut to size after it has been made shear-resistant and non-tacky.

4. Process according to Claim 3, **characterized in that** the cutting to size is undertaken by stamping.

5. Process according to any of Claims 1 to 4, **characterized in that** the reinforcing material is preformed during drying of the binder liquid (2).

6. Process according to any of Claims 1 to 5, **characterized in that** the binder liquid (2) is applied by means of an impregnating bath.

7. Process according to any of Claims 1 to 6, **characterized in that** the proportion of the chemical binder, based on the entire binder matrix, is below 5%.

8. Fibre-composite moulding, constructed using at least one layer which has been formed from woven, non-woven, scrim, paper, or knitted fabric, and which is composed of a reinforcing material composed of natural fibres (1) and a cured biopolymer (3), **characterized in that** the layer composed of the reinforcing material has been coated with a layer fixing the fibres (1) of the reinforcing material in the layer to one another and composed of a chemical binder (2), and that the proportion of the chemical binder, based on the entire binder matrix, is below 20%.

9. Fibre-composite moulding according to Claim 8, **characterized in that** the natural fibres (1) have been formed from flax fibres, hemp fibres, ramie fibres, jute fibres, or cellulose-based fibres.

10. Fibre-composite moulding according to Claim 8 or 9, **characterized in that** the biopolymer (3) is a thermoset.

11. Fibre-composite moulding according to Claim 10, **characterized in that** the biopolymer has been selected from the group of curable cellulose derivatives, curable starch derivatives, curable lactic acid derivatives, curable shellac derivatives, and vegetable-oil-based thermosets.

12. Fibre-composite moulding according to any of Claims 8 to 11, **characterized by** a plurality of layers stacked upon each other of the reinforcing material coated with the chemical binder (2).

13. Fibre-composite moulding according to any of Claims 8 to 12, **characterized in that** the proportion of the chemical binder, based on the entire binder matrix, is below 5%.

## Revendications

1. Procédé de fabrication d'un article moulé contenant des fibres à partir d'au moins une couche de matière de renforcement en fibres naturelles (1) et un biopolymère (3) durcissable, dans lequel, la couche de matière de renforcement découpée formée de tissu, nappe, natte, papier, tricot ou tissu de mailles est imprégnée par le biopolymère (3) sous forme liquide, puis est mise en forme par pressage et est durcie, **caractérisé en ce que** sur la couche de matière de renforcement, avant l'imprégnation par le biopolymère (3), est appliqué un liant chimique liquide (2), de sorte qu'après le séchage du liant chimique liquide (2) est obtenue une sorte de couche préimprégnée résistant au cisaillement non collante et que la proportion du liant chimique liquide par rapport au total de la matrice de liant est inférieure à 20%.

2. Procédé selon la revendication 1, **caractérisé en ce que** la couche de matière de renforcement résistant au cisaillement et non collante obtenue est empilée en plusieurs couches avant le pressage.

3. Procédé selon la revendication 1 ou 2, **caractérisé en ce que** la couche de matière de renforcement résistant au cisaillement et non collante obtenue est d'abord découpée à dimension.

4. Procédé selon la revendication 3, **caractérisé en ce que** le découpage à dimension est réalisé par estampage.

5. Procédé selon l'une des revendications 1 à 4, **caractérisé en ce que** la matière de renforcement est préformée lors du séchage du liant liquide (2).

6. Procédé selon l'une des revendications 1 à 5, **caractérisé en ce que** le liant liquide (2) est appliqué au moyen d'un bain d'imprégnation.

7. Procédé selon l'une des revendications 1 à 6, **caractérisé en ce que** la proportion du liant chimique par rapport à la totalité de la matrice de liant est inférieure à 5%.

8. Article moulé contenant des fibres réalisé avec au moins une couche de matière de renforcement en fibres naturelles (1) formée de tissu, nappe, natte, tricot ou tissu à mailles et un biopolymère (3) durcissable, **caractérisé en ce que** la couche de matière de renforcement est recouverte par une couche de liant chimique pour fixer les unes aux autres les fibres (1) de la matière de renforcement et que la proportion de liant chimique par rapport au total de la matrice de liant est inférieure à 20%.

9. Article moulé selon la revendication 8, **caractérisé en ce que** les fibres naturelles (1) sont constituées par des fibres à base de lin, de chanvre, de ramie, de jute, ou de cellulose.

10. Article moulé selon la revendication 8 ou 9, **caractérisé en ce que** le biopolymère (3) est une matière plastique thermodurcissable.

11. Article moulé selon !a revendication 10, **caractérisé en ce que** le biopolymère est choisi dans le groupe des matières plastiques thermodurcissables à base de dérivés, de cellulose, d'amidon, d'acide lactique, de gomme-laque et d'huiles végétales.

12. Article moulé selon l'une des revendications 8 à 11, **caractérisé par** plusieurs couches empilées les unes sur les autres de matière de renforcement recouverte par ledit liant chimique (2).

13. Article moulé selon l'une des revendications 8 à 12, **caractérisé en ce que** la proportion de liant chimique par rapport au total de la matrice de liant est inférieure à 5%.
